# FASCICULE DE BREVET EUROPEEN

(11) **EP 1 385 260 B1**
(45) Date de publication et mention de la délivrance du brevet: **14.03.2012**
(21) Numéro de dépôt: 03291639.7
(22) Date de dépôt: 03.07.2003
(51) Int. Cl.: H02M 7/219, H02J 7/14

(54) **Unité de commande à consommation contrôlée pour transistor de puissance dans un pont redresseur pour un alternateur ou un alterno-démarreur**
Energiespareinheit zur Leistungsschaltersteuerung einer Gleichrichterbrücke für einen Generator oder einen Starter-Generator
Unit with controlled consumption for the command of power switches in a rectifier bridge supplying an alternator or a starter-alternator

(30) Priorité: 04.07.2002 FR 0208417
(43) Date de publication de la demande: 28.01.2004
(73) Titulaire: VALEO EQUIPEMENTS ELECTRIQUES MOTEUR, 94017 Créteil Cedex (FR)
(72) Inventeur: Pichon, Francis, 95610 Eragny sur Oise (FR); Pierret, Jean-Marie, 75012 Paris (FR)

(56) Documents cités:
- EP-A- 0 777 309
- EP-A- 1 134 886
- DE-A- 19 946 025
- US-B1- 6 195 276

## Description

### Domaine de l'invention

L'invention concerne une unité de commande d'un transistor de puissance d'un pont redresseur pour un alternateur ou un alterno-démarreur d'un véhicule automobile dans laquelle la consommation électrique est contrôlée de façon à réduire la consommation sur l'alimentation auxiliaire de l'unité de commande. L'invention trouve des applications dans le domaine de l'industrie automobile et, en particulier, dans le domaine des altemateurs et des alterno-démarreurs pour véhicules automobiles.

### Etat de la technique

Dans un véhicule automobile, l'alternateur permet de transformer un mouvement de rotation du rotor inducteur, entraîné par le moteur thermique du véhicule, en un courant électrique induit dans les bobinages du stator. L'alternateur peut aussi être réversible et constituer un moteur électrique, permettant d'entraîner en rotation, via l'arbre du rotor, le moteur thermique du véhicule. Cet alternateur réversible est appelé alterno-démarreur, ou encore alternateur-démarreur, et permet de transformer l'énergie mécanique en une énergie électrique, et vice versa. Ainsi, un alterno-démarreur peut démarrer le moteur du véhicule automobile, constituer un moteur auxiliaire pour entraîner, par exemple, un compresseur de climatisation ou encore fonctionner en mode moteur pour entraîner le véhicule automobile. En général, le stator comporte trois bobinages de sorte que l'alternateur est de type triphasé.

Cette machine de type polyphasé et réversible fonctionne donc en alternateur pour, notamment, charger la batterie du véhicule et, en démarreur pour entraîner le moteur à combustion interne, à savoir le moteur thermique du véhicule automobile, lors de son démarrage.

A cet effet, le pont redresseur, en sortie de l'induit de l'alterno-démarreur, sert également de pont de commande des phases de l'alterno-démarreur. Ce pont redresseur est relié aux différentes phases de l'induit et monté entre la masse et une borne d'alimentation de la batterie. Ce pont redresseur comporte trois branches comprenant chacune deux transistors de puissance de type MOSFET. Les transistors de ce pont redresseur sont pilotés chacun par une unité de commande.

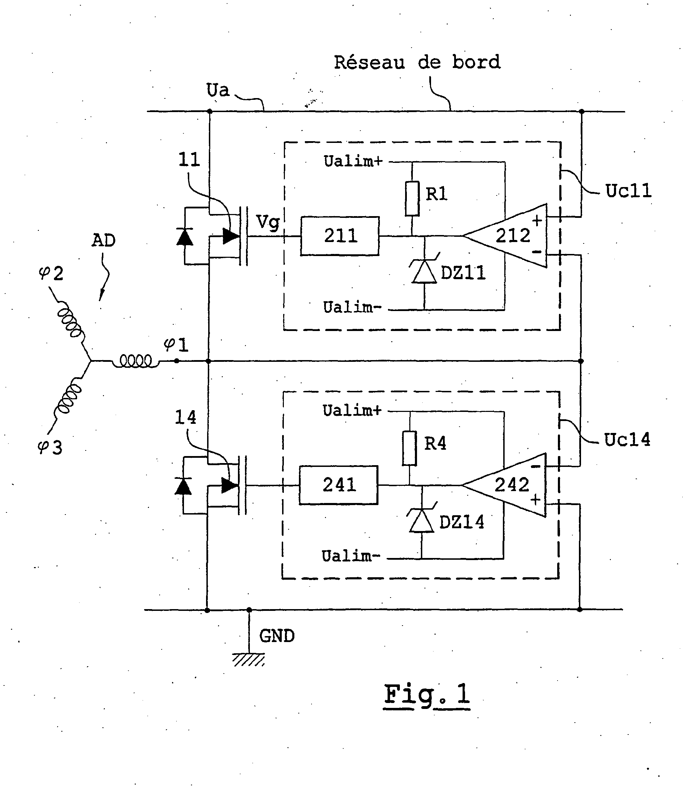

La demande de brevet FR-A-2 806 553 décrit un tel pont redresseur pour un alternateur triphasé. Ce pont redresseur comporte trois branches connectées chacune entre une phase de l'alterno-démarreur ϕ1, ϕ2, ϕ3, l'alimentation Ua du réseau de bord et la ligne de masse GND du véhicule. Sur la figure 1, on a représenté une des branches de ce pont redresseur. Cette branche comporte deux transistors 11 et 14 connectés, respectivement, entre l'alimentation Ua et la phase ϕ1 de l'alterno-démarreur et entre la phase ϕ1 de l'alterno-démarreur et la masse GND. Chaque transistor 11 et 14 est piloté par une unité de commande Uc11 et Uc14. Toutes les unités de commande du pont redresseur forment ensemble le dispositif de commande dudit pont redresseur.

Ces unités de commande sont prévues pour comparer une tension de phase ϕ1 de l'alternateur avec une tension de référence, qui est la tension Ua ou la masse GND, et pour commander le transistor auquel elle est associée, en fonction du résultat de la comparaison. Chaque unité de commande Uc11 et Uc14 comporte un driver, appelé aussi circuit de commande, qui permet d'assurer la commande du transistor MOS à partir d'un signal logique. Ce signal logique est délivré par la sortie d'un comparateur formé d'un amplificateur opérationnel 212, 242. La sortie de cet amplificateur est reliée à une tension d'alimentation Ualim+ par une résistance R1, R4. Cette même sortie de l'amplificateur 212, 242 est reliée à une tension Ualim- par une diode Zener DZ11, DZ14. Cette résistance et cette diode Zener permettent de calibrer le niveau de sortie du comparateur 212, 242 à une valeur compatible avec les niveaux d'entrées du driver 211, 241, par exemple 0 et 5 volts, par rapport au potentiel Ualim-.

Le comparateur 212 compare le potentiel de la phase ϕ1 de l'alternateur avec la tension de sortie de l'alternateur, c'est-à-dire la tension Ua du réseau de bord ou tension de batterie. Si le potentiel de phase ϕ1 est supérieur à Ua alors le niveau de sortie du comparateur 212 est tel que le transistor MOS est rendu fermé. Au contraire, si le potentiel de phase ϕ1 est inférieur à Ua, alors le niveau de sortie du comparateur 212 est tel que le transistor MOS est rendu ouvert.

Par ailleurs, le potentiel présent sur l'alimentation Ua du réseau de bord peut atteindre des valeurs faibles, c'est-à-dire de l'ordre de 5 volts, par rapport au potentiel de masse par exemple lors du démarrage du véhicule. Or, les transistors MOS ont besoin d'une tension de l'ordre de 15 volts entre leur grille et leur source pour être totalement fermés. Cette contrainte impose la nécessité d'avoir, dans l'unité de commande, une alimentation auxiliaire, ou alimentation BOOST, référencée Ub. Généralement, cette alimentation auxiliaire Ub fournit un potentiel supérieur à l'alimentation de réseau de bord Ua, de façon à permettre une polarisation correcte de la grille de chaque transistor lorsque celui-ci est fermé. Cette alimentation auxiliaire Ub est particulièrement nécessaire pour les transistors MOS qui commutent les entrées de phase sur le potentiel positif Ua du réseau de bord, mais elle est aussi utile pour les transistors MOS qui commutent les entrées de phase sur le potentiel de masse GND.

Une telle alimentation auxiliaire Ub doit normalement délivrer un courant important, qui dépend du nombre de commutations liées à la vitesse de rotation, du nombre de transistors à commuter et du maintien en court-circuit ou en charge des potentiels grilles-sources, lorsque les transistors MOS sont respectivement ouverts ou fermés.

Or, une telle alimentation auxiliaire est coûteuse du point de vue de sa consommation électrique. En outre, cette alimentation auxiliaire est volumineuse ; et plus elle doit fournir des courants élevés, plus elle est volumineuse.

### Exposé de l'invention

L'invention a justement pour but de remédier aux problèmes de la technique évoquée précédemment. Pour cela, l'invention propose une unité de commande dans laquelle on réduit les courants nécessaires au fonctionnement du driver et on favorise, chaque fois que cela est possible, l'utilisation de l'alimentation du réseau de bord.

Plus précisément, l'invention concerne un redresseur de tension pour alternateur polyphasé de véhicule automobile, ou alternateur-démarreur, connecté entre l'alternateur, une alimentation de réseau de bord du véhicule et une ligne de masse de ce véhicule, comportant un pont redresseur comprenant plusieurs transistors de puissance et plusieurs unités de commande, chaque unité de commande étant associée à un transistor et comportant un driver et au moins une alimentation auxiliaire. Ce redresseur de tension se caractérise par le fait que l'alimentation auxiliaire ne fournit du courant au driver que lorsque l'alimentation du réseau de bord est insuffisante.

L'alimentation Ua du réseau de bord fournit le courant nécessaire au driver tant que Ua - Vs est supérieur à une valeur de tension prédéterminée, Vs étant la tension de source du transistor, et l'alimentation auxiliaire fournit le courant au driver dès que Ua - Vs est inférieur à la valeur prédéterminée.

### Brève description des dessins

La figure 1, déjà décrite, représente une branche du pont redresseur selon l'art antérieur.

La figure 2 représente le driver d'une unité de commande conforme à l'invention.

Les figures 3 et 4 représentent des variantes de l'unité de commande de l'invention.

### Description détaillée de modes de réalisation de l'invention

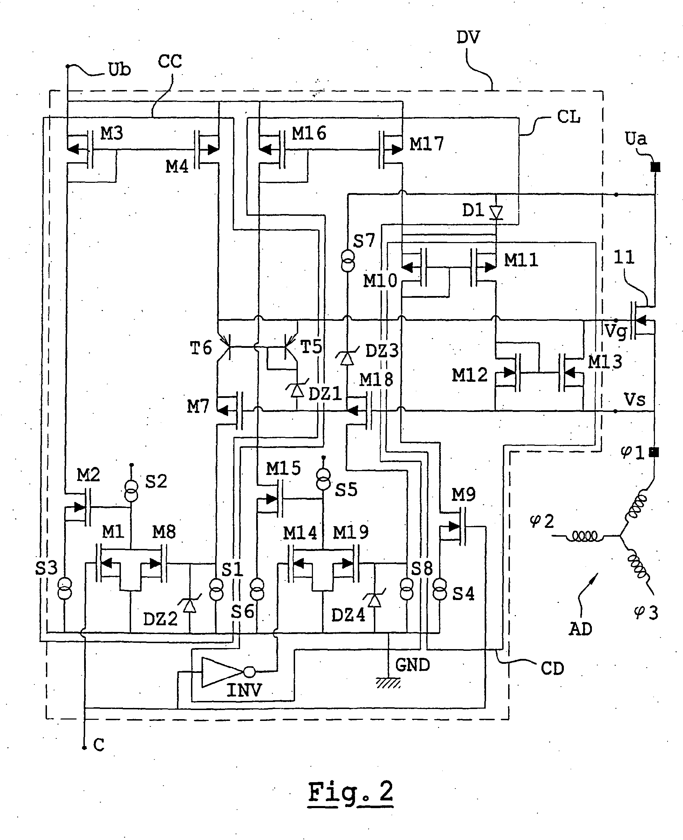

La figure 2 représente le driver de l'unité de commande d'un transistor de puissance MOS selon l'invention. Ce driver peut être inséré dans unité de commande telle que celle représentée sur la figure 1, à la place du driver 211, pour commander le transistor high side 11.

Le driver de l'invention peut aussi être inséré à la place du driver 241 de la figure 1, mais son interrêt est alors plus limité car le transistor low side qu'il pilote est connecté à la masse permettent une commande de grille plus aisée.

La figure 2 montre le transistor de puissance 11 d'une des branches du pont redresseur pour un alternateur ou un alterno-démarreur d'un véhicule automobile. Ce transistor de puissance 11 est un transistor high side, qui commute l'entrée de phase ϕ1 sur le potentiel du réseau de bord Ua. Il est donc connecté entre la phase ϕ1 de l'alterno-démarreur AD et l'alimentation Ua de réseau de bord d'un véhicule automobile. Ce transistor de puissance 11 est commandé par une unité de commande comportant un comparateur, qui peut être identique au comparateur 212 de la figure 1, et dont la sortie est connectée à l'entrée d'un driver DV. Ce driver DV reçoit donc en entrée le signal C de comparaison de la phase ϕ1 et du potentiel de l'alimentation Ua du réseau de bord. Le driver DV est également connecté à une alimentation auxiliaire Ub dont le potentiel est supérieur à celui de l'alimentation du réseau de bord Ua. Cette alimentation fournit le courant nécessaire au fonctionnement du driver dès lors que celui-ci est trop élevé pour être fourni par l'alimentation du reseau de bord Ua, en particulier, lors de la commutation du transistor 11.

Le driver DV comporte des moyens qui permettent de limiter la charge de la grille Vg du transistor 11 lorsque le potentiel de la grille Vg est voisin du potentiel de l'alimentation auxiliaire Ub. Autrement dit, lorsque Ub - Vg < 0.6 +/- 0.2 volts alors la charge de la grille est arrêtée.

Le driver comporte également des moyens utilisés, lors de la décharge de la grille, pour ouvrir le transistor de puissance 11. Ces moyens sont alimentés automatiquement par le potentiel du réseau de bord Ua lorsque la différence de potentiel entre la source Vs du transistor et le réseau de bord Ua est supérieure à une valeur de tension prédéterminée permettant l'alimentation de ces moyens.

Par exemple : lorsque Ua - Vs < 4 +/- 0.5 volts alors le circuit est alimenté par Ub.

Par contre, lorsque Ua - Vs > 4 +/- 0.5 volts alors le circuit est alimenté par Ua.

En d'autres termes, le driver DV de l'invention permet de contrôler le courant à l'intérieur du driver lui-même et de limiter la consommation électrique par l'alimentation auxiliaire Ub dès que cela est possible, en favorisant l'alimentation par la source de potentiel du réseau de bord Ua.

Pour cela, le driver de l'invention comporte les circuits suivants : un circuit de charge CC, un circuit de décharge CD et un circuit de limitation CL.

Le circuit de charge CC comporte des transistors MOS M1, M2, M3, M4, M7 et M8 ainsi que des transistors bipolaires T5 et T6. Ce circuit de charge CC comporte également des sources de courants S1, S2, S3 et des diodes écrêteuses DZ1 et DZ2. La source de courant S1 est connectée en parallèle avec une diode écrêteuse DZ2 sur la grille du transistor M8. Les drains des transistors M1 et M8 sont connectés sur la source de courant S2 et leurs sources sont connectées ensemble sur la masse. La grille du transistor M1 reçoit en entrée le signal C provenant du comparateur de l'unité de commande. La source de courant S3 est connectée sur la source du transistor M2 et la grille de ce transistor M2 est connectée également sur la source de courant S2. Le drain du transistor M2 est connecté au circuit miroir de courant M3 - M4. Le drain du transistor M4 est connecté, d'une part, sur la grille du transistor de puissance 11 et, d'autre part, sur un circuit miroir T5 - T6. Le collecteur du transistor T5 est connecté sur la grille du transistor M7 par l'intermédiaire d'une diode écrêteuse DZ1.

Ce circuit de charge est en fait un générateur de courant constant qui fonctionne de la façon suivante : lorsque l'entrée du driver DV reçoit un signal C de niveau 0 et que la grille du transistor M8 est maintenue à la masse par la source de courant S1, alors les transistors M1 et M8 sont ouverts et la source de courant S2 ferme le transistor M2. Le courant délivré par le transistor M2 est limité par la source de courant S3 à une valeur précise, par exemple de 5 milliampères. Le transistor M4 forme, avec le transistor M3, un circuit miroir de courant, qui permet d'amplifier le courant présent dans M3 par un rapport constant prédéfini. Ce rapport peut être, par exemple, de 20. Dans ce cas, le courant obtenu en sortie du transistor M4 est de 100 milliampères. Ce courant est utilisé pour charger la grille Vg du transistor de puissance 11.

La charge de la grille Vg est limitée à 15 volts entre la grille Vg et la source Vs de la façon suivante : à partir de 15 volts, un élément à seuil, comme par exemple une diode écrêteuse DZ1 (dont le seuil est de 14 V), libère le circuit miroir de courant constitué par les transistors bipolaires T6 et T5. Le courant obtenu en sortie de ce circuit miroir et, en particulier, en sortie du transistor T6 neutralise la source de courant S1, par l'intermédiaire du transistor M7, et charge la grille du transistor M8. Ce transistor M8 se ferme sur la grille du transistor M2 qui s'ouvre ainsi que le circuit miroir constitué par les transistors M3 et M4.

Le transistor M7 est un transistor séparateur destiné à protéger les transistors bipolaires T5 et T6 qui ne supportent que de faibles tensions. La diode écrêteuse DZ2 protège la grille du transistor M8.

Un tel circuit de charge CC limite de lui-même le courant prit sur l'alimentation auxiliaire Ub. En effet le courant pris sur l'alimentation Ub par le transistor M3 est de 5 milliampères et le courant pris par le transistor M4 est de 100 milliampères, soit en tout 105 milliampères prit sur l'alimentation auxiliaire Ub pendant la charge de la grille du transistor de puissance 11. En fin de charge, et si le potentiel de la grille Vg est voisin du potentiel de Ub, alors la charge de la grille s'arrête et il ne subsiste que le courant traversant le transistor M3, c'est-à-dire 5 milliampères. Cette valeur est suffisamment faible pour être supportée par l'alimentation auxiliaire Ub.

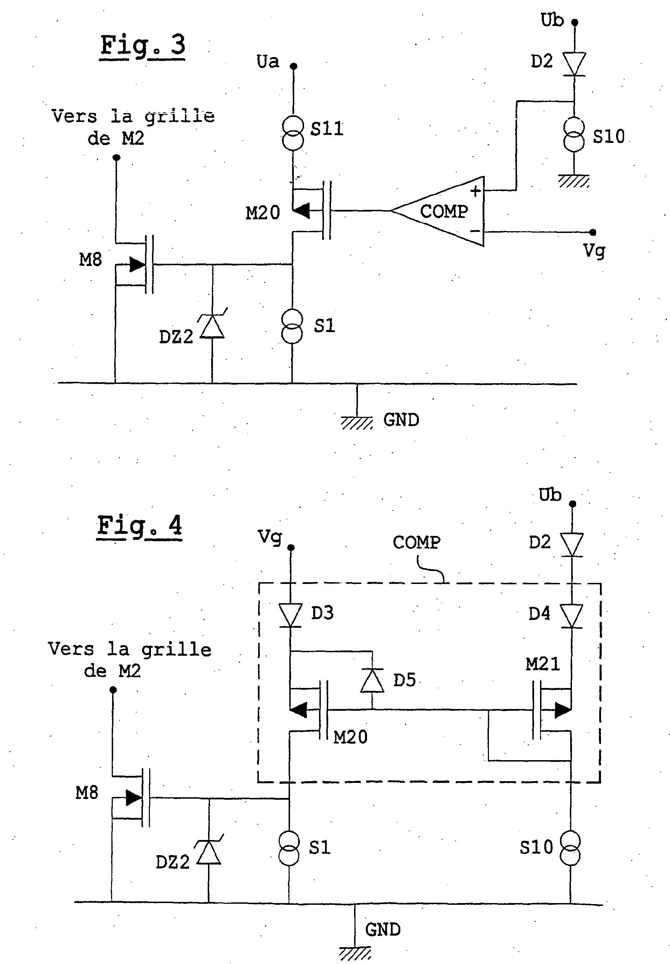

Il est possible aussi de supprimer complètement le courant délivré par l'alimentation auxiliaire Ub. Dans ce cas, on peut supprimer les courants dans le circuit miroir constitué des transistors M3 et M4 par le résultat d'une comparaison entre la tension de grille Vg et une tension de référence proche de la tension Ub et prédéfinie. Un tel mode de réalisation est mis en oeuvre par le circuit de la figure 3.

Sur cette figure 3, on a représenté un mode de réalisation du circuit électrique permettant de supprimer les courants dans le circuit miroir M3 - M4. Dans ce circuit, la tension de référence proche de la tension Ub est obtenue par la tension de jonction d'une diode D2 reliée à l'alimentation auxiliaire Ub et alimentée par la source de courant S10. La tension de jonction obtenue est voisine de 0.6 volts. Un comparateur COMP libère la source de courant S11, par l'intermédiaire du transistor M20, quand le potentiel de la grille Vg du transistor 11 devient supérieur à la référence fixée par la diode D2. La source de courant S11 est prévue pour délivrer un courant supérieur à celui de la source S1, ce qui neutralise la source de courant S1, par l'intermédiaire du transistor 20 et, par conséquent, charge la grille du transistor M8. Ce transistor M8 se ferme sur la grille du transistor M2 qui s'ouvre ainsi que le circuit miroir M3 - M4. Dans ces conditions, le circuit de charge CC de la grille du transistor puissance 11 est complètement ouvert lorsque la grille est chargée à la valeur Ub - 0.6 volts. Le circuit de charge CC ne prend alors aucun courant sur l'alimentation auxiliaire Ub, excepté le courant de la source S10 qui est négligeable, à savoir de l'ordre de quelques micro- ampères.

Dans ce mode de réalisation, les éléments formant le circuit de la figure 3 sont intégrés entre la grille du transistor 11 et la source de courant S1 du circuit de charge CC de la figure 2.

Un second mode de réalisation du circuit électrique permettant de supprimer les courants dans le circuit miroir M3 - M4 est représenté sur la figure 4. Dans ce mode de réalisation, le comparateur COMP est réalisé très simplement de la façon suivante : il est constitué de 2 transistors M20 et M21 et de 2 diodes D3 et D4. Le transistor 20 est relié à la grille Vg du transistor de puissance 11 par l'intermédiaire de la diode D3. Le transistor M21 et la diode D4 sont placés entre la diode D2 et la source de courant S10. Cette diode D4 a pour rôle de compenser la chute de tension dans la diode D3 quand une comparaison est réalisée. La diode D5 protège le transistor M20 entre la grille et la source. Quand la tension de grille Vg du transistor 11 est bien inférieure à l'alimentation auxiliaire Ub, alors la diode D3 est polarisée en inverse et le transistor M20 ne peut être alimenté. Par contre, quand la tension de grille Vg est proche de Ub, la diode D3 est polarisée en direct et alimente le transistor M20 qui se ferme et charge la grille du transistor M8, en neutralisant la source de courant S1. Ce transistor M8 se ferme sur la grille du transistor M2 qui s'ouvre ainsi que le circuit miroir M3 - M4. Dans ces conditions, le circuit de charge CC de la grille du transistor 11 est complètement ouvert comme dans le mode de réalisation précédent.

Le circuit de décharge CD du driver DV assure la décharge de la grille du transistor de puissance 11. Ce circuit de décharge CD est constitué par les transistors M9, M10, M11, M12 et M13 et par la source de courant S4. La source de courant S4 est connectée entre la masse et la source du transistor M9. La grille du transistor M9 reçoit le signal C et le drain de ce transistor est connecté sur le circuit miroir M10 - M11. Le drain du transistor M11 est connecté sur un circuit miroir M12 - M13, lui-même connecté entre la grille et la source du transistor du puissance 11.

Ce circuit de décharge CD est en fait un générateur de courant constant qui fonctionne de la façon suivante : lorsque le signal C à l'entrée du driver DV est au niveau 1, le transistor M9 à son état ouvert. Le courant délivré par le transistor M9 est limité par la source de courant S4 à une valeur précise, par exemple de 5 milliampères. Les circuits miroirs de courant constitués par les transistors M10 et M11 et par les transistors M12 et M13 amplifient ce courant avec des rapports constants, par exemple de 4 pour le circuit M10 - M11 et de 20 pour le circuit M12 - M13.

On évite la décharge de la grille Vg du transistor de puissance 11 à travers les bobinages du stator, ce qui impose de décharger la grille directement entre la grille Vg et la source Vs du transistor 11, contrairement à une décharge classique qui s'effectuerait entre la grille et le potentiel de masse. L'utilisation de 2 circuits miroirs de courant M10 - M11 et M12 - M13 permet de décharger la grille du transistor 11 quel que soit le potentiel de la source Vs de ce dernier (compris entre la masse et le potentiel de l'alimentation du réseau de bord Ua).

Par ailleurs, il est nécessaire d'assurer l'ouverture du transistor 11 en maintenant la grille du transistor 11 au potentiel de source. Autrement dit, le transistor M13 doit rester fermé tant que le transistor de puissance 11 doit rester ouvert, ce qui n'est possible que si les 2 circuits miroirs M10 - M11 et M12 - M13 sont alimentés par une tension suffisante.

Or, dans l'invention, on veut éviter d'alimenter ces circuits miroirs M10 - M11 et M12-M13 par l'alimentation auxiliaire Ub avec un courant important de l'ordre de 25 milliampères pendant toute la durée d'ouverture du transistor 11. En conséquence, dans l'invention, on alimente les circuits miroirs M10 - M11 et M12 - M13 par l'alimentation auxiliaire Ub uniquement lorsque la tension Ua - Vs entre la source du transistor 11 (entrée de phase ϕ1) et le drain (potentiel du réseau de bord Ua) est trop faible, puis on alimente M10 - M11 et M12 - M13 par le potentiel de réseau de bord Ua dès que la tension Ua - Vs est suffisante, cette condition étant obtenue quand l'ouverture du transistor 11 et la fermeture du transistor 14 entraînent la décroissance du potentiel de l'entrée de phase ϕ1.

De cette façon, l'alimentation auxiliaire Ub n'alimente le circuit de décharge de grille du transistor 11 que pendant la transition entre l'état fermé et l'état ouvert de ce transistor 11. Et cette transition est de très faible durée par rapport au temps d'ouverture. Elle ne demande donc pas un courant très important à l'alimentation auxiliaire Ub.

Cela est réalisé au moyen d'un circuit de limitation CL connecté entre le circuit de charge CC et le circuit de charge CD. Ce circuit de limitation CL comporte les transistor M14, M15, M16, M17, M18 et M19 ainsi que les sources de courant S5, S6, S7 et S8 et les diodes DZ3, DZ4 et D1. Il comporte également un inverseur INV. En fait, le circuit de limitation CL comporte des éléments identiques à ceux du circuit de charge excepté que le circuit miroir T6 - T7 est remplacé par une source de courant S7 connectée à une diode Zener DZ3, elle-même connectée sur la source du transistor M18 dont la grille est connectée sur la source du transistor de puissance 11. Le drain de ce transistor M18 est connecté sur la source S8.

Ce circuit de limitation CL a pour but de favoriser l'alimentation du circuit de décharge CD par l'alimentation de réseau de bord Ua tant que cela est possible. Il fonctionne de la façon suivante : la grille du transistor M19 est maintenue à la masse par la source de courant S8, lorsque le signal C est au niveau 1 la sortie de l'inverseur INV, qui reçoit le signal C en entrée, transforme ce signal en un signal de niveau 0. Le transistor M14 est ouvert et la source de courant S5 ferme le transistor M15. Le courant délivré par le transistor M15 est limité par la source de courant S6 à une valeur précise, par exemple de 5 milliampères. Le circuit miroir de courant constitué par les transistors M16 et M17 amplifie ce courant dans un rapport constant, par exemple de 20, ce qui permet à l'alimentation auxiliaire Ub d'alimenter les circuits miroirs de courant M10 - M11 et M12 - M13 par l'intermédiaire du transistor M17.

Ce mode d'alimentation disparaît pendant la décharge de la grille du transistor 11 ce qui provoque l'ouverture du transistor 11 et la chute du potentiel de l'entrée de phase ϕ1. Lorsque la différence de potentiel Ua - Vs entre l'alimentation du réseau de bord Ua et l'entrée de phase ϕ1 est supérieure à une valeur prédéterminée, un élément à seuil, comme par exemple une diode écrêteuse DZ3 (dont le seuil peut être de 3 volts) libère la source de courant S7. Le courant obtenu neutralise la source de courant S8 par l'intermédiaire du transistor M18 et charge la grille du transistor M19. Ce transistor M19 se ferme sur la grille du transistor M15 qui s'ouvre ainsi que le circuit miroir M16 - M17.

Ainsi, l'alimentation auxiliaire Ub n'alimente plus les deux circuits miroirs de courant M10 - M11 et M12 - M13. Ceux-ci sont alimentés par l'alimentation du réseau de bord Ua, par l'intermédiaire de la diode D1. Pendant le reste du temps d'ouverture du transistor de puissance 11, les deux circuits miroirs M10 - M11 et M12 - M13 sont alimentés par la tension Ua.

## Revendications

1. Redresseur de tension pour un alternateur polyphasé de véhicule automobile ou un alterno-démarreur, connecté entre l'alternateur (AD), une alimentation (Ua) de réseau de bord du véhicule et une ligne de masse (GND) dudit véhicule, comportant un pont redresseur comprenant plusieurs transistors de puissance (11, 14) et plusieurs unités de commande(Uc11, Uc14), chaque unité de commande étant associée à un transistor (11) et comporte un driver (DV) et au moins une alimentation auxiliaire (Ub),
**caractérisé en ce que** l'alimentation (Ua) du réseau de bord fournit le courant nécessaire au driver (DV) tant que Ua - Vs est supérieur à une valeur de tension prédéterminée, Vs étant la tension de source du transistor, et **en ce que** l'alimentation auxiliaire (Ub) fournit le courant au driver (DV) dès que Ua - Vs est inférieur à la valeur de tension prédéterminée.

2. Redresseur de tension selon la revendication 1, **caractérisé en ce que** l'alimentation auxiliaire alimente le driver uniquement pendant des temps de commutation du transistor de puissance auquel l'unité est associée.

3. Redresseur de tension selon l'une des revendications 1 et 2, **caractérisé en ce que** le courant nécessaire au driver est contrôlé et limté.

4. Redresseur de tension selon la revendication 1, **caractérisé en ce que** le driver comporte des moyens pour limiter la charge de la grille du transistor lorsque le potentiel de la grille est voisin du potentiel de l'alimentation auxiliaire.

5. Redresseur de tension selon l'une des revendications 1 à 4, **caractérisé en ce que** le driver comporte des moyens pour supprimer la consommation électrique dans un circuit de charge de la grille du transistor lorsque le potentiel de la grille du transistor est voisin d'un potentiel de référence proche du potentiel de l'alimentaion auxiliaire.

6. Redresseur de tension selon l'une des revendications 1 à 5, **caractérisé en ce qu'**un circuit de décharge de la grille du transistor est automatiquement alimenté par l'alimentation du réseau de bord lorsqu'une différence de potentiel entre la source du transistor et l'alimentation du réseau de bord est supérieure à une valeur prédéterminée d'alimentation du circuit de décharge.

## Claims

1. Voltage rectifier for polyphase alternator of a motor vehicle or a starter-alternator, connected between the alternator (AD), a power supply (Ua) for a network on board the vehicle and a ground line (GND) of said vehicle, comprising a rectifier bridge comprising a number of power transistors (11, 14) and a number of control units (Uc11, Uc14), each control unit being associated with a transistor (11) includes a driver (DV) and at least one auxiliary power supply (Ub), **characterized in that** the power supply (Ua) of the onboard network supplies the necessary current to the driver (DV) as long as Ua - Vs is greater than a predetermined voltage value, Vs being the source voltage of the transistor, and **in that** the auxiliary power supply (Ub) supplies the current to the driver (DV) as soon as Ua - Vs is less than the predetermined voltage value.

2. Voltage rectifier according to Claim 1, **characterized in that** the auxiliary power supply powers the driver only during the switching time of the power transistor with which the unit is associated.

3. Voltage rectifier according to one of Claims 1 and 2, **characterized in that** the current necessary to the driver is controlled and limited.

4. Voltage rectifier according to Claim 1, **characterized in that** the driver includes means for limiting the charge of the gate of the transistor when the potential of the gate is close to the potential of the auxiliary power supply.

5. Voltage rectifier according to one of Claims 1 to 4, **characterized in that** the driver includes means for eliminating the electrical consumption in a circuit for charging the gate of the transistor when the potential of the gate of the transistor is close to a reference potential close to the potential of the auxiliary power supply.

6. Voltage rectifier according to one of Claims 1 to 5, **characterized in that** a circuit for discharging the gate of the transistor is automatically supplied by the onboard network power supply when a potential difference between the source of the transistor and the onboard network power supply is greater than a predetermined discharge circuit power supply value.

## Patentansprüche

1. Spannungsgleichrichter für einen Mehrphasengenerator eines Kraftfahrzeugs oder einen Starter-Generator, der zwischen dem Generator (AD), einer Bordnetzversorgung (Ua) des Fahrzeugs und einer Masseleitung (GND) des Fahrzeugs angeschlossen ist, der eine Gleichrichterbrücke aufweist, die mehrere Leistungstransistoren (11, 14) und mehrere Steuereinheiten (Uc11, Uc14) enthält, wobei jede Steuereinheit einem Transistor (11) zugeordnet ist und einen Treiber (DV) und mindestens eine Hilfsversorgung (Ub) aufweist,
**dadurch gekennzeichnet, dass** die Versorgung (Ua) des Bordnetzes den für den Treiber (DV) notwendigen Strom liefert, so lange Ua - Vs höher als ein vorbestimmter Spannungswert ist, wobei Vs die Quellenspannung des Transistors ist, und dass die Hilfsversorgung (Ub) den Strom an den Treiber (DV) liefert, sobald Ua - Vs geringer als der vorbestimmte Spannungswert ist.

2. Spannungsgleichrichter nach Anspruch 1, **dadurch gekennzeichnet, dass** die Hilfsversorgung den Treiber nur während Umschaltzeiten des Leistungstransistors versorgt, dem die Einheit zugeordnet ist.

3. Spannungsgleichrichter nach einem der Ansprüche 1 und 2, **dadurch gekennzeichnet, dass** der für den Treiber notwendige Strom geregelt und begrenzt ist.

4. Spannungsgleichrichter nach Anspruch 1, **dadurch gekennzeichnet, dass** der Treiber Einrichtungen aufweist, um die Ladung des Gates des Transistors zu begrenzen, wenn das Potential des Gates nahe dem Potential der Hilfsversorgung ist.

5. Spannungsgleichrichter nach einem der Ansprüche 1 bis 4, **dadurch gekennzeichnet, dass** der Treiber Einrichtungen aufweist, um den Stromverbrauch in einem Ladekreis des Gates des Transistors zu abzuschalten, wenn das Potential des Gates des Transistors einem Bezugspotential nahe dem Potential der Hilfsversorgung benachbart ist.

6. Spannungsgleichrichter nach einem der Ansprüche 1 bis 5, **dadurch gekennzeichnet, dass** ein Entladekreis des Gates des Transistors automatisch von der Versorgung des Bordnetzes versorgt wird, wenn eine Potentialdifferenz zwischen der Source des Transistors und der Versorgung des Bordnetzes höher als ein vorbestimmter Wert der Versorgung des Entladekreises ist.
